# EUROPEAN PATENT SPECIFICATION

(11) **EP 2 096 935 B1**
(45) Date of publication and mention of the grant of the patent: **04.04.2012**
(21) Application number: 07847328.7
(22) Date of filing: 26.11.2007
(51) Int. Cl.: A23D 7/005

(54) **WATER CONTINUOUS FRYING COMPOSITION**
FRITTIERZUSAMMENSETZUNG MIT GESCHLOSSENER WASSERPHASE
COMPOSITION DE FRITURE À PHASE AQUEUSE CONTINUE

(30) Priority: 19.12.2006 EP 06126531
(43) Date of publication of application: 09.09.2009
(73) Proprietor: Unilever N.V., 3013 AL Rotterdam (NL); Unilever PLC, London EC4Y 0DY (GB)
(72) Inventor: HOGERVORST, Wim Theodorus, 3133 AT Vlaardingen (NL)
(74) Representative: Rosen Jacobson, Frans Lucas M.
(86) International application number: PCT/EP2007/062791
(87) International publication number: WO 2008/074593

(56) References cited:
- WO-A-02/45519
- WO-A-2005/058066
- WO-A-2005/058067
- GB-A- 378 372

## Description

### Technical field.

The invention relates to oil-in-water emulsion food products, in particular liquid products with low fat content showing a good spattering behaviour when used in shallow frying.

### Background

Frying composition are compositions that are used for frying food. Common frying agents such as butter or margarine are fat continuous. Liquid margarines are popular with consumers due to their easy dosing. Most liquid margarines are also fat continuous. However, these fat continuous often suffer from spattering which is believed to be caused by superheating of the dispersed water droplets. In addition, fat continuous emulsion spreads and liquid products are poor in physical stability at elevated temperatures e.g. above 30°C. Another drawback from fat continuous frying compositions is the use of hardstock fat which gives the frying composition a high level of saturated fatty acids which are not desirable from a health perspective. Furthermore, the use of hardstock fat requires high energy processing due to the necessary liquefying of the hardstock fat in the process.

Water continuous frying emulsions are also known e.g. from WO02/45519. However, water continuous frying emulsions often contain salt and lecithin, a high level of emulsifiers and a high fat content (50 to 80 wt% of fat). The effect of sole lecithin on spattering is small, therefore a substantial amount of salt exceeding 0.3 wt.% should be added to get good spattering behaviour. In current trends in healthy lifestyles, a lower sodium content for food products is often desired, as high salt levels are associated with high blood pressure. Furthermore the water continuous frying composition often foam considerably which is not desirable from a consumer's perspective.

Another drawback of the frying compositions of WO02/45519 is the relative high level of emulsifiers needed.

For the consumer it is not always easy to know when the frying composition is ready to use for shallow frying (i.e. when to add the food product to be fried to the heated frying composition). The changes in the development of foaming when heating water continuous frying compositions provide the consumer with a visual cue when the composition is ready to use for shallow frying. Typically the composition starts foaming after a certain time of heating the composition. When no considerable amount of foaming is seen anymore the composition is ready to use for shallow frying. It is desired that the composition can be used as quick as possible after starting to heat the composition.

A relatively high salt content is typical for most prior art cooking oils which show an improved spattering behaviour. The presently available alternatives for lecithin and cooking salt consist of non-natural substances.

H. Pardun, in Fette,Seifen, Anstrichmittel 79(5), 1977, pp. 195-203 describes the use of milled soy protein concentrates as antispattering agents in margarines. The antispattering agents proposed by Pardun have the disadvantage that when heated in the pan during shallow frying, they may decompose and give char formation. Moreover, we have found that when margarines of Pardun are prepared using modern margarine equipment, such as a votator, the antispattering agents are no longer effective.

W02005/058067 and W02005/013056 disclose fat continuous frying compositions with improved spattering behaviour that comprise porous powderous vegetable matter made from nuts, seeds kernels, pits and cellulose having a volume weighted mean particle diameter (d_{4,3}) not exceeding 0.5 mm.

There is therefore a need for a composition that has excellent spattering behaviour also with low fat content. Furthermore nutritional benefits as low salt, and low saturated fatty acid content and low fat are desired. Preferably the composition has less foaming and uses less additives. In addition, ambient stability is also sought after. Moreover a cold processing of the composition has benefits as it uses less energy than high energy processes. Furthermore, the composition preferable provides a visual cue that shows when the composition is ready to use. Preferably the composition is ready to use for frying relatively quick.

### Summary of the invention

It is an object to provide a frying product having a good spattering performance in shallow frying. A further object is to provide a frying product having a lower fat content, e.g. around 60 wt.% fat, or even lower, while maintaining good spattering performance. A further object to provide healthy frying product, in particular having a low amount of salt, and a low amount of SAFA. Another object of the invention is to provide a frying product that does not brown or give of-taste or leave a sediment or foams upon heating to high temperatures. In addition, a further object of the invention is to provide a frying product that needs less ingredients, such as emulsifiers. Moreover, another object of the invention is to provide a frying product that can be made by cold processing using less energy. In addition an object of the invention is to provide ambient stable products. Furthermore it is an object of the invention to provide a frying product that provides a visual cue. It is also an object of the invention to provide a frying product that is ready to use for frying in a shorter amount of time.

One or more of these objects are attained according to the invention which provides an oil-in-water emulsion food product comprising 10 to 90 wt% fat and 0.05 - 5 wt% of a porous powderous vegetable matter made from nuts, seeds, kernels, pits and cellulose having a volume weighted mean particle diameter (d4,3) not exceeding 0.5 mm.

### Details of the invention

Suitable composition according to the invention are pourable and have a Bostwick value at 7 cm/30 sec, preferably more than 10 cm/30 sec at 15 °C.

Compositions comprise 10 to 60 wt% of liquid oil.

Suitably the volume weighted mean particle diameter (d_{4,3}) of the porous powderous vegetable matter does not exceed 0.1 mm, preferably not 0.04 mm.

Preferably the porous powderous vegetable matter is evenly dispersed throughout one or more phases of the water continuous composition.

Preferred compositions have a pH between 3 and 8.

Preferably the composition according to the invention have the fat is dispersed in a water phase, whereby the average droplet size (*d_{4,3}*) of the fat is less than 12, preferably less than 8 µm, more preferably less than 6 µm, most preferred from 0.35 to 4 µm.

In a preferred embodiment the compositions comprise at least one emulsifier having a hydrophilic/lipophilic balance value of at least 7. Preferred amounts for emulsifiers are 0.1 to 5 wt%. Suitably the emulsifier is selected from the group comprising di-acetyl tartaric acid esters of monoglycerides and/or diglycerides (DATEM), polyoxyethylene sorbitan mono stearate (Tween), sucrose esters, sodium stearoyl lactylate (SSL), polygycerol esters (PGE), acetylated pectin, esters of citric acid with monoglycerides and/or with diglycerides, lactic acid esters of mono-and/or diglycerides, succinic acid esters of mono-and/or diglycerides; or combinations thereof.

A preferred emulsifier is DATEM which is suitably used in a amount of from 0.3 to 3 wt%.

In a preferred embodiment the composition according to the invention comprise a biopolymer in an amount of 0.01 to 0.5 wt% on total composition weight, preferably 0.05 to 0.3 wt%.

The composition according to the invention may comprise an additional antispattering agent, such as lecithin an/or salt. Suitably the antispattering agent comprises salt in an amount of from 0.01 to 5 wt% on total weight of the composition. Preferably lecithin is present in an amount of from 0.05 to 2 wt% on total weight of the composition.

Preferably the porous powderous vegetable matter is admixed to the water continuous frying emulsion.

Preferred porous powderous vegetable matter consists of milled kernels of olive oil.

Still other preferred porous powderous vegetable matter consists of milled sunflower seeds or milled linseeds.

Furthermore other preferred porous powderous vegetable matter consists of milled soybeans.

Moreover other preferred porous powderous vegetable matter consists of milled nuts selected from the group consisting of pine tree nuts, almonds, ground nuts, walnuts and cashew nuts.

Suitably the composition according to the invention is substantially free from cooking salt, preferably below 0.9 wt%, more preferably below 0.5 wt%.

The oil-in-water emulsion food products according to the present invention may be produced according to a process which comprises the following steps:
a. selecting an oil-in-water emulsion
b. selecting emulsion insoluble vegetable matter having a consistency which allows milling to a powder,
c. milling the vegetable matter to a powder having an average particle size not exceeding 0.5 mm,
d. admixing the resulting powder to the oil-in-water emulsion in an amount of 0.05 - 5 wt.% on product and getting it evenly dispersed throughout the oil-in-water emulsion.

The process for the preparation of a water continuous frying composition according to the invention involves at least one process step in which the pressure is 0.20 MPa or more and wherein the porous powderous vegetable matter is not subjected to any pressure of 0.20 MPa or more.

Preferably the porous powderous vegetable matter is prepared by milling vegetable matter. More preferably the porous powderous vegetable matter is prepared by milling and extracting oil from oil containing vegetable matter. Suitably the porous powderdous vegetable matter is prepared by milling vegetable matter, which has been extracted with an organic solvent.

In a preferred embodiment the vegetable matter is pre-milled, oil-extracted and then the extracted vegetable matter is milled to prepare the porous powdered vegetable matter.

### Experimental:

### Measuring pourability

Pourability or squeezability is measured according to the standard Bostwick protocol. The Bostwick equipment consists of a 125 ml reservoir provided with an outlet near the bottom of a horizontally placed rectangular tub and closed with a vertical barrier. The tub's bottom is provided with a 25 cm measuring scale, extending from the outlet of the reservoir. When equipment and sample both have a temperature of 15°C, the reservoir is filled with 125 ml of the sample after it has been shaken by hand ten times up and down. When the closure of the reservoir is removed the sample flows from the reservoir and spreads over the tub bottom. The path length of the flow is measured after 30 seconds. The value, expressed as cm per 30 seconds is the Bostwick rating, which is used as yard stick for pourability.
The maximum value that can be determined with this measurement is 23.

### Example 1

### Preparation of an edible oil-in-water emulsion

A pourable margarine was prepared with the composition shown in table.

**Table1: Composition of a 58 wt.% fat pourable margarine**

| Ingredient | Amount (wt.%) |
|---|---|
| *Oil phase* | |
| Sunflower oil | 57.50 |
| polyoxyethylene sorbitan monostearat (emulsifier) | 0.2 |
| Fractionated lecithin Cetinol | 0.3 |
| *Water phase* | |
| Water | 40.637 |
| Sodium chloride | 1.2 |
| Xanthan gum | 0.15 |
| Beta-carotene solution in water | 0.075 |
| Potassium Sorbate | 0.1 |
| Soy flour | 0.1 |
| Citric Acid Anhydrate | 0.038 |

### Preparation of pourable margarines

The water phase was prepared by dissolving all water-soluble ingredients in de-mineralised water at 25°C. Firstly the gum's (Xanthan or Guar) are dissolved in the water phase, after this the other water phase ingredients are dissolved. Citric Acid Anhydrate is dissolved in the water phase as the last ingredient while stirring with an Ultra Turrax device or directly in a Colloidmill. The oil phase used for the emulsion was prepared by dissolving the oil soluable components in sunflower oil in a glass beaker. The ingredients are dissolved in sunflower oil at a temperature of approx. 65°C.

The oil phase was added to the water phase in the Colloidmill, while stirring intensively, slowly to keep the emulsion water-continuous. After addition of the oil phase the emulsion was stirred for 5 min. at high speed in the Colloidmill.

### Example 2 - 3

Example 1 was repeated, but now with 79.5 wt.% sunflower oil (comparative example 2) and 37.5 wt.% sunflower oil (example 3). The amount of water was adjusted such that the total composition remained 100 wt.%. The spattering values of the liquid margarines are given in table 2.

### Comparative experiment A

Example 1 was repeated, but now without soy flour. The spattering values of the liquid margarine are given in table 2.

### Determination of spattering value

Primary spattering (SV1) was assessed under standardised conditions in which an aliquot of a food product was heated in a glass dish and the amount of fat spattered onto a sheet of paper held above the dish was assessed after the water content of the food product had been driven off by heating.

Secondary spattering (SV2) was assessed under standardised conditions in which the amount of fat spattered onto a sheet of paper held above the dish is assessed after injection of a quantity of 10 ml water into the dish.

In assessment of both primary and secondary spattering value about 25 g food product was heated in a glass dish on an electric plate to about 205 °C. The fat that spattered out of the pan by force of expanding evaporating water droplets was caught on a sheet of paper situated above the pan. The image obtained was compared with a set of standard pictures number 0-10 whereby the number of the best resembling picture was recorded as the spattering value. 10 indicates no spattering and zero indicates very bad spattering. The general indication is as follows.

| *Score* | *Comments* |
|---|---|
| 10 | excellent |
| 8 | good |
| 6 | passable |
| 4 | unsatisfactory for SV1, almost passable for SV2 |
| 2 | very poor |

Typical results for household margarines (80 wt% fat) are 8 for primary spattering (SV1) and 5 for secondary spattering (SV2) under the conditions of the above mentioned test.

**Table 2: spattering values of frying compositions**

| Example | Fat content of emulsion product (wt.%) | Amount of soy flour (wt.%) | SV1 | SV2 |
|---|---|---|---|---|
| 1 | 60 | 0.1 | 9 | 7.5 |
| 2 | 80 | 0.1 | 8 | 7 |
| 3 | 40 | 0.2 | 10 | 8 |
| A | 60 | 0 | 4.5 | 5.5 |

### Comparative example B:

A water continuous frying composition with the following ingredients was prepared.

**Table 3:Ingredients example B**

| | |
|---|---|
| Sunflower Oil | 59 % |
| Water | balance to 100wt% |
| Polyoxyethylene sorbitan fatty acid ester (Tween 60) | 1 wt% |
| Salt (NaCl) | 1.5 wt% |
| Lecithin (cetinol) | 0.3 wt% |
| Potassium sorbate | 0.1 wt% |

Comparison of example 1 to comparative example B show that example B shows considerably more foaming upon heating than the example 1 according to the invention.

### Comparative experiment C

### Assessment of foam development

About 25 gram of the water continuous composition was heated in a glass dish on an electric plate of about 205 °C. The foam development was assessed by visual inspection about every 10 seconds.

For example 1 with and without 0.1 wt% of soy flour the foam development was assessed (see Table 4).

**Table 4: Assessment of foam development**

| Example | Fat content of emulsion product (wt.) | Amount of soy flour (wt.%) | Start of foam development | No considerable foam development anymore |
|---|---|---|---|---|
| 1 | 60 | 0.1 | After about 10 seconds | After about 150 seconds |
| A | 60 | 0 | After about 40 seconds | After about 180 seconds |

Comparison of example 1 to comparative example A shows that for example A it takes more time for the foam development to start than for example 1 according to the invention.

### Comparative experiment D

### Measurement of stability

The stability of the composition over storage was measured by determining the amount of free water according to the following methodology.

The composition was stored in a plastic bottle in a temperature cabinet at a specific temperature.

The free water content was calculated by measuring the height of the separated water phase in mm (A), measuring the fill height of the bottle in mm (B) and then divide the two according to the following formula: (A/B)*100.

The outcome of this calculation is the % of free water.

Pourable water continuous compositions according to Table 5 were prepared using the method of preparation as mentioned above under the header "Preparation of pourable margarines" with the difference that the water when preparing the water phase had a temperature of about 40 °C.

**Table 5**

| Ingredient | Comparative example D (wt.%) | Example 4 (wt.%) | Example 5 (wt.%) |
|---|---|---|---|
| *Oil phase* | | | |
| Sunflower oil | 57.5 | 57.5 | 57.5 |
| polyoxyethylene sorbitan monostearat (emulsifier) | 0.2 | 0.2 | 0.2 |
| Fractionated lecithin Cetinol | 0.3 | 0.3 | 0.3 |
| *Water phase* | | | |

| Water | balance | balance | balance |
|---|---|---|---|
| Sodium chloride | 1.5 | 1.5 | 1.5 |
| Xantham gum | 0.2 | 0.2 | 0.2 |
| Beta-carotene solution in water | 0.05 | 0.05 | 0.05 |
| Potassium Sorbate | 0.1 | 0.1 | 0.1 |
| Soy flour | none | 0.1 | 0.2 |
| Citric Acid Anhydrate | 0.038 | 0.038 | 0.038 |
| TOTAL | 100 | 100 | 100 |

The compositions according to Table 5 were stored at 5 or 30 °C for a period of 20 weeks. The % of free water was measured (see Tables 6 and 7).

**Table 6: % of free water stored at 5 °C**

| Week | Comparative D | Example 4 | Example 5 |
|---|---|---|---|
| 1 | 0 | 0 | 0 |
| 2 | 1.5 | 0 | 0 |
| 4 | 1.8 | 0 | 0 |
| 6 | 2.4 | 1.2 | 0 |
| 9 | 3.3 | 1.2 | 0.9 |
| 16 | 4.8 | 2.1 | 1.2 |
| 20 | 6.1 | 2.8 | 1.5 |

**Table 7: % of free water stored at 30 °C**

| Week | Comparative D | Example 4 | Example 5 |
|---|---|---|---|
| 1 | 0 | 0 | 0 |
| 2 | 3 | 1.5 | 0 |
| 4 | 4.2 | 1.8 | 0 |
| 6 | 5.9 | 2.4 | 1.8 |
| 9 | 8.6 | 3.6 | 2.4 |
| 16 | 12.3 | 4.9 | 3.9 |
| 20 | 15.8 | 6.7 | 5.1 |

Comparison of comparative example D and examples 4 and 5 shows that examples 4 and 5 according to the invention have an improved stability upon storage compared to example D.

## Claims

1. Water-continuous composition comprising 10 to 60 wt% of liquid oil and 0.05-5 wt.% of a porous powderous vegetable matter made from nuts, seeds, beans kernels, pits and cellulose having a volume weighted mean particle diameter (d_{4,3}) not exceeding 0.5 mm.

2. Composition according to claim 1, having a Bostwick value at 15°C of at least 7.

3. Composition according to claim 1 or 2, comprising at least one emulsifier having a hydrophilic/lipophilic balance value of at least 7.

4. Composition according to claim 3, comprising 0.1 to 5 wt.% of emulsifier selected from the group comprising di-acetyl tartaric acid esters of monoglycerides and/or diglycerides (DATEM), polyoxyethylene sorbitan fatty acid esters (Tween), sucrose esters, sodium stearoyl lactylate (SSL), polygycerol esters (PGE), acetylated pectin, esters of citric acid with monoglycerides and/or with diglycerides, lactic acid esters of mono-and/or diglycerides, succinic acid esters of mono-and/or diglycerides; or combinations thereof.

5. Composition according to claim 4, wherein the emulsifier is DATEM in a preferred amount of from 0.3 to 3 wt%.

6. Composition according to any of claim 5 comprising a biopolymer in an amount of 0.01 to 0.5 wt% on total composition weight, preferably 0.01 to 0.3 wt%.

7. Composition according to any of claim 1 to 6, wherein the volume weighted mean particle diameter (d_{4,3}) of the porous powderous vegetable matter does not exceed 0.1 mm, preferably not 0.04 mm.

8. Composition according to any of claim 1 to 7, wherein 0.4 - 1.0 wt.% of the porous powderous vegetable matter is admixed to the water continuous frying emulsion.

9. Composition according to any of claim 1 to 8, wherein the porous powderous vegetable matter consists of milled sunflower seeds or milled linseeds.

10. Composition according to any of claim 1 to 8, wherein the porous powderous vegetable matter consists of milled soybeans.

11. Composition according to any of claim 1 to 8, wherein the porous powderous vegetable matter consists of milled nuts selected from the group consisting of pine tree nuts, almonds, ground nuts, walnuts and cashew nuts.

12. Process for the preparation of a water continuous food product according to claim 1 comprising porous powderous vegetable matter having a volume weighted mean particle diameter (d_{4,3}) not exceeding 0.5 mm, wherein the process involves at least one process step in which the pressure is 0.20 MPa or more and wherein the porous powderous vegetable matter is not subjected to any pressure of 0.20 MPa or more.

13. Process according to claim 12, wherein the porous powderous vegetable matter is prepared by milling vegetable matter.

14. Process according to claim 13, wherein the porous powderous vegetable matter is prepared by milling and extracting oil from oil containing vegetable matter.

15. Process according to any of claims 12 to 15, wherein the vegetable matter is pre-milled, oil-extracted and then the extracted vegetable matter is milled to prepare the porous powdered vegetable matter.

## Patentansprüche

1. Zusammensetzung mit kontinuierlicher Wasserphase, umfassend 10 bis 60 Gew.-% flüssiges Öl und 0,05 bis 5 Gew.-% eines porösen pulverförmigen vegetabilischen Materials, das aus Nüssen, Samen, Bohnen, Körnern, Steinen und Cellulose besteht, das einen volumengewichteten mittleren Partikeldurchmesser (d_{4,3}) hat, der 0,5 mm nicht übersteigt.

2. Zusammensetzung gemäß Anspruch 1, die einen Bostwick-Wert bei 15 °C von wenigstens 7 hat.

3. Zusammensetzung gemäß Anspruch 1 oder 2, die wenigstens einen Emulgator umfasst, welcher einen Wert des Hydrophile-lipophile-Gleichgewichts von wenigstens 7 hat.

4. Zusammensetzung gemäß Anspruch 3, die 0,1 bis 5 Gew.-% Emulgator, ausgewählt aus der Gruppe, umfassend Diacetylweinsäureester von Monoglyceriden und/oder Diglyceriden (DATEM), Polyoxyethylensorbitanfettsäureester (Tween), Saccharoseester, Natriumstearoyllactylat (SSL), Polyglycerinester (PGE), acetyliertes Pektin, Ester von Citronensäure mit Monoglyceriden und/oder mit Diglyceriden, Milchsäureester von Mono- und/oder Diglyceriden, Bernsteinsäureester von Mono- und/oder Diglyceriden oder Kombinationen davon, umfasst..

5. Zusammensetzung gemäß Anspruch 4, wobei der Emulgator DATEM in einer bevorzugten Menge von 0,3 bis 3 Gew.-% ist.

6. Zusammensetzung gemäß Anspruch 5, umfassend ein Biopolymer in einer Menge von 0,01 bis 0,5 Gew.-%, bezogen auf das gesamte Zusammensetzungsgewicht, vorzugsweise 0,01 bis 0,3 Gew.-%.

7. Zusammensetzung gemäß einem der Ansprüche 1 bis 6, wobei der volumengewichtete mittlere Partikeldurchmesser (d_{4,3}) des porösen pulverförmigen vegetabilischen Materials 0,1 mm nicht übersteigt, vorzugsweise 0,04 mm nicht übersteigt.

8. Zusammensetzung gemäß einem der Ansprüche 1 bis 7, wobei 0,4 bis 1,0 Gew.-% des porösen pulverförmigen vegetabilischen Materials zu der Frittieremulsion bzw. Bratemulsion mit kontinuierlicher Wasserphase zugesetzt sind.

9. Zusammensetzung gemäß einem der Ansprüche 1 bis 8, wobei das poröse pulverförmige vegetabilische Material aus gemahlenen Sonnenblumenkernen oder gemahlenen Leinsamen besteht.

10. Zusammensetzung gemäß einem der Ansprüche 1 bis 8, wobei das poröse pulverförmige vegetabilische Material aus gemahlenen Sojabohnen besteht.

11. Zusammensetzung gemäß einem der Ansprüche 1 bis 8, wobei das porösen pulverförmige vegetabilische Material aus gemahlenen Nüssen, ausgewählt aus der Gruppe, bestehend aus Pinienkernen, Mandeln, gemahlenen Nüssen, Walnüssen und Cashew-Nüssen besteht.

12. Verfahren zur Herstellung eines Lebensmittelprodukts mit kontinuierlicher Wasserphase gemäß Anspruch 1, das poröses pulverförmiges vegetabilisches Material umfasst, welches einen volumengewichteten mittleren Partikeldurchmesser (d_{4,3}) hat, der 0,5 mm nicht übersteigt, wobei das Verfahren wenigstens einen Verfahrensschritt involviert, in dem der Druck 0,20 MPa oder mehr ist, und wobei das poröse pulverförmige vegetabilische Material keinem Druck von 0,20 MPa oder mehr unterworfen wird.

13. Verfahren gemäß Anspruch 12, wobei das poröse pulverförmige vegetabilische Material durch Mahlen von vegetabilischem Material hergestellt wird.

14. Verfahren gemäß Anspruch 13, wobei das poröse pulverförmige vegetabilische Material durch Mahlen und Extrahieren von Öl aus Öl enthaltendem vegetabilischem Material hergestellt wird.

15. Verfahren gemäß einem der Ansprüche 12 bis 15, wobei das vegetabilische Material vorgemahlen wird, Öl-extrahiert wird und das extrahierte vegetabilische Material gemahlen wird, um das poröse pulverförmige vegetabilische Material herzustellen.

## Revendications

1. Composition à phase aqueuse continue comprenant 10 à 60 % en poids d'huile liquide et 0,05 à 5 % en poids d'une matière végétale poreuse en poudre préparée à partir de noix, de graines, de graines de haricot, de noyaux et de cellulose ayant un diamètre de particules moyen pondéré en volume (d_{4,3}) ne dépassant pas 0,5 mm.

2. Composition selon la revendication 1, ayant une valeur de Bostwick à 15°C d'au moins 7.

3. Composition selon la revendication 1 ou 2, comprenant au moins un émulsifiant ayant une valeur d'équilibre hydrophile-lipophile d'au moins 7.

4. Composition selon la revendication 3, comprenant 0,1 à 5 % en poids d'émulsifiant choisi dans le groupe comprenant les esters diacétyl-tartriques des mono- et/ou diglycérides d'acides gras (DATEM), les esters polyoxyéthylénés de sorbitane et d'acides gras (Tween), les saccharo-esters d'acides gras, le stéaroyl-lactylate de sodium (SSL), les esters de polyglycérol d'acides gras (PGE), la pectine acétylée, les esters citriques des mono- et/ou diglycérides d'acides gras, les esters lactiques des mono- et/ou diglycérides d'acides gras, les esters succiniques des mono- et/ou diglycérides d'acides gras ou des combinaisons de ceux-ci.

5. Composition selon la revendication 4, dans laquelle l'émulsifiant est les DATEM en une quantité préférée allant de 0,3 à 3 % en poids.

6. Composition selon l'une quelconque des revendications 5 comprenant un biopolymère en une quantité allant de 0,01 à 0,5 % en poids par rapport au poids total de la composition, de préférence de 0,01 à 0,3 % en poids.

7. Composition selon l'une quelconque des revendications 1 à 6, dans laquelle le diamètre de particules moyen pondéré en volume (d_{4,3}) de la matière végétale poreuse en poudre ne dépasse pas 0,1 mm, de préférence ne dépasse pas 0,04 mm.

8. Composition selon l'une quelconque des revendications 1 à 7, dans laquelle on mélange 0,4 à 1,0 % en poids de matière végétale poreuse en poudre à l'émulsion pour friture à phase aqueuse continue.

9. Composition selon l'une quelconque des revendications 1 à 8, dans laquelle la matière végétale poreuse en poudre se compose de graines de tournesol broyées ou de graines de lin broyées.

10. Composition selon l'une quelconque des revendications 1 à 8, dans laquelle la matière végétale poreuse en poudre se compose de germes de soja broyés.

11. Composition selon l'une quelconque des revendications 1 à 8, dans laquelle la matière végétale poreuse en poudre se compose de noix broyées choisies dans le groupe constitué des pignons de pin, des amandes, des arachides, des noix et des noix de cajou.

12. Procédé destiné à la préparation d'un produit alimentaire à phase aqueuse continue selon la revendication 1, comprenant de la matière végétale poreuse en poudre ayant un diamètre de particules moyen pondéré en volume (d_{4,3}) ne dépassant pas 0,5 mm, le produit comprenant au moins une étape de traitement dans laquelle la pression est supérieure ou égale à 0,20 MPa et où la matière végétale poreuse en poudre n'est soumise à aucune pression supérieure ou égale à 0,20 MPa.

13. Procédé selon la revendication 12, dans lequel la matière végétale poreuse en poudre est préparée en broyant la matière végétale.

14. Procédé selon la revendication 13, dans lequel la matière végétale poreuse en poudre est préparée par broyage et extraction d'huile à partir de matière végétale contenant de l'huile.

15. Procédé selon l'une quelconque des revendications 12 à 15, dans lequel la matière végétale est préalablement broyée, pressée pour en extraire de l'huile puis la matière végétale extraite est broyée pour préparer la matière végétale poreuse en poudre.
